# EUROPEAN PATENT SPECIFICATION

(11) **EP 1 810 292 B1**
(45) Date of publication and mention of the grant of the patent: **28.05.2008**
(21) Application number: 04798164.2
(22) Date of filing: 04.11.2004
(51) Int. Cl.: G11B 7/26, B25B 11/00, B29D 17/00

(54) **TILT MANAGEMENT DEVICE AND METHOD**
NEIGUNGSVERWALTUNGSEINRICHTUNG UND -VERFAHREN
DISPOSITIF ET PROCEDE DE GESTION D'INCLINAISON

(43) Date of publication of application: 25.07.2007
(73) Proprietor: 4M Technologies Holding, 1400 Yverdon (CH)
(72) Inventor: GREY, Stephen, 1936 Verbier (CH); BOCHUD, Jean-Daniel, 1867 Ollon (CH)
(74) Representative: P&TS Patents & Technology Surveys SA
(86) International application number: PCT/EP2004/052808
(87) International publication number: WO 2006/048045

(56) References cited:
- EP-A- 1 256 948
- US-A- 5 932 042
- US-B1- 6 231 705

## Description

The present invention relates to a tilt management device and to a tilt management method. The present invention relates more particularly to a device for managing and controlling the tilt of assembled optical discs.

Some optical data carriers, in particular digital versatile discs (DVDs), are made of the assembly of two half-discs or substrates that preferably adhere together with an ultraviolet curable glue. During the manufacture of recordable DVDs, for example, a first plastic substrate is first covered with a thin film of a recording ink, often referred to as dye, and then with a thin metal layer. An ultraviolet curable glue is then preferably applied on the metal layer and a second plastic substrate is deposited on the first one. The two substrates are then for example rotated together in order to regularly spread the glue between them. The disc is then submitted to ultraviolet radiation in order to polymerize the glue and thus bond the two substrates together.

An important quality criterion for optical discs is their planarity. In particular the recording speed and/or the data access speed strongly depend on the disc's planarity. If a disc is not sufficiently flat, the laser beam writing and/or reading data on the disc needs to be often focused on the recording and/or data containing layer, thus extending the time needed for writing and/or reading data. The disc's planarity thus determines the maximal writing and/or reading speed on the disc. Recordable DVDs (DVD-R, DVD+R) and rewritable DVDs (DVD-RW, DVD+RW), for example, are categorized in function of their planarity. Discs with a better planarity will be sold as discs able to achieve higher writing speed, for example 16x instead of 8x. With the increasing market needs for high writing and/or reading speed, the requirements regarding the planarity of the optical discs thus also increase.

A measure of the planarity is the tilt which represents the height difference between the center of the disc and its outer diameter when the disc is placed horizontally. The tilt value can be essentially constant over the entire periphery of the disc, i.e. the disc is either slightly concave or slightly convex, or it can significantly vary and have one or more local maxima and mini ma along its periphery. This is for example due to deformations such as radial waves distributed around the center of the disc.

Prior art solutions to improve the planarity of assembled optical discs usually include maintaining them on a flat surface during at least a part of their manufacturing process. A first solution is for example to lay the discs on a perfectly flat surface for a sufficiently long period, such that they conform to the flat surface under the effect of their own weight. This solution however does not allow very low tilt value to be achieved. Another solution is for example to press the discs between two flat elements for some time. A drawback of this solution is the risk of mechanical damage to the discs if they are pressed too strongly. Still another solution is to firmly hold the disc against a flat grid by sucking air from below it. Such solutions are for example described in patent application EP 1 256 948 A2 and in patent US 6,231,705.

After the bonding of the substrates, the assembled discs however usually undergo further operations such as for example drying, printing of various information such as the manufacturer's name and the maximal writing speed, etc. During these operations, and particularly during printing which is usually done by serigraphy, the discs can be subjected to further deformations which increase again their tilt value. Serigraphy on one surface of the discs, for instance, implies mechanical stress on this surface which can cause the discs to become slightly concave or convex, thus increasing their tilt value which can then possibly fall out of the required range.

Patent US 5,932,042 (cf. the preamble of claims 1 and 5) describes a disc deforming jig used during final bonding of the discs to compensate for any tendency of the disc halves to deform during the bonding operation. The deforming jig comprises an outer ring and an inner ring of suction feet that are in direct contact with their upper surface. These force applying means used for deforming the optical discs are thus very intrusive and can lead to serious damages of the optical discs.

An aim of the present invention is to propose a device and a method allowing for a more accurate control of the tilt value of assembled optical discs.

Another aim of the present invention is to propose a device and a method allowing for future deformations of assembled optical discs to be compensated.

Still another aim of the present invention is to propose a device and method preventing any damage to the assembled optical discs while still offering an efficient control of their tilt value.

These aims are achieved with a device and a method with the characteristics of the corresponding independent claim, variant embodiments being given by the dependent claims.

These aims are achieved in particular with a tilt management device for modifying and controlling the tilt of optical discs, comprising:
a support for supporting an optical disc,
force applying means for applying on the disc a force for attracting and/or pushing at least a part of it towards the support when the disc is placed on the support, thus modifying the tilt of the disc,
a controller for varying said force, thus varying the tilt of the disc.

These aims are also achieved in particular with a tilt management method for modifying and controlling the tilt of optical discs, comprising the steps of:
- placing an optical disc on a support,
- applying on the disc a force for attracting and/or pushing at least a part of it towards the support, thus modifying the tilt of the disc,
- varying the force for varying the tilt of the disc.

With the tilt management method and the tilt management device of the invention, optical discs can be produced with a predetermined tilt value different from zero. The tilt of the optical disc can be varied by varying the force applied on it immediately before and/or during its set-up, for example during its bonding with ultraviolet radiations. With the tilt management method and the tilt management device of the invention, we can thus pre-stress the disc during its set-up, for example during its bonding through curing of an ultraviolet- curing glue spread between its substrates.

The invention will be better understood with the help of the description of a preferred embodiment illustrated by the figures in which:
Figure 1 is a top view of an example of a curing station with a tilt management device according to a preferred embodiment of the invention,
Figure 2 is a front view of a tilt management device according to a preferred embodiment of the invention,
Figure 3 is a partially cut perspective view of some elements of the tilt management device of figure 2,
Figure 4 is a partially cut side view of the elements of figure 3 with an optical disc,
Figure 5 is a partially cut side view of the elements of figure 3 when forcing the optical disc into an example of a required shape.

Unless otherwise stated, the same references designate the same objects in all figures.

In a preferred embodiment, the tilt management device of the invention is associated with a manufacturing line for the manufacture of assembled optical discs made of at least two substrates. These optical discs are for example digital versatile discs (DVDs), for example recordable DVDs (DVD-R, DVD+R), rewritable DVDs (DVD-RW, DVD+RW) and/or prerecorded DVDs (for example DVD-9). In a first part of the manufacturing process, which falls outside the scope of this invention, a first substrate is for example coated with a data recording composition such as dye or it is imprinted-with digital data. It is then covered with a thin metal layer. A preferably ultraviolet curable glue is then applied on the first substrate and a second substrate is laid on the first one. The two substrates are then for example rotated together in order to regularly spread the glue between them.

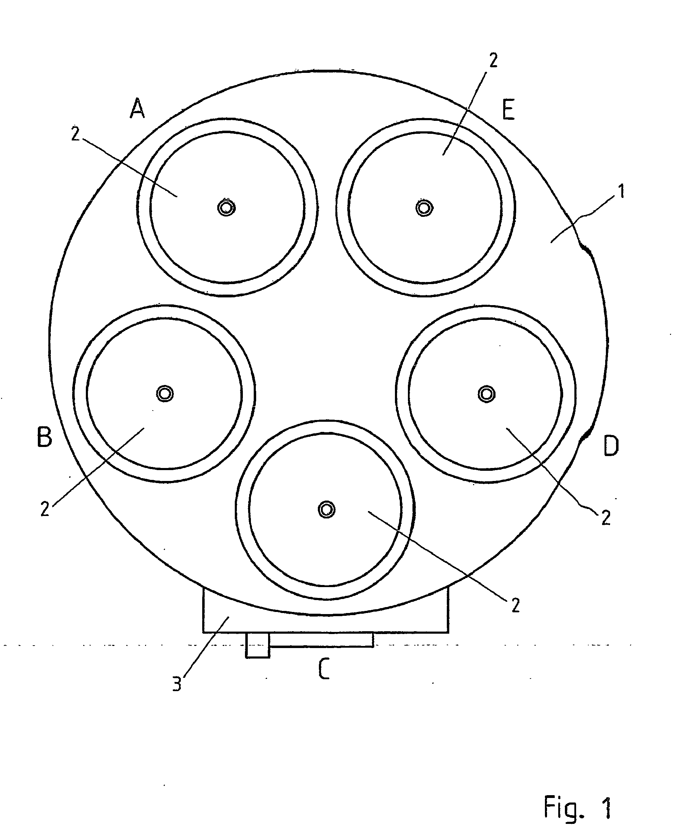

Once the glue is regularly spread, the disc is preferably set up by bonding the substrates together, for example by exposing the assembled disc to ultraviolet radiations in a preferably automatic curing station. Figure 1 partially and schematically illustrates an example of a curing station comprising a tilt management device according to a preferred embodiment of the invention. The curing station includes for example a horizontally rotating plate 1 comprising five supports 2 able to each carry a disc. The plate 1 is preferably rotated in a step-by-step movement by a fifth of a turn at each step, thus defining five positions A, B, C, D, E around its periphery. At each step, the supports 2 are stopped in these defined positions A, B, C, D, E, each support 2 being stopped successively in each position A, B, C, D, E. The rotating plate 1 is for example actuated by a stepping rotating motor (not represented).

The curing station comprises for example two entry positions A, B followed by one curing position C and two exit positions D, E. Two assembled discs to be bonded are thus for example deposited at every second step of plate 1 on the two supports 2 stopped at the entry positions A, B. The discs are preferably deposited automatically by the previous element of the automatic optical disc production line.

The curing position C comprises for example an ultraviolet device (not represented) capable of generating ultraviolet radiation flashes for polymerizing the ultraviolet curable glue and thereby bond together the two substrates of the exposed discs. The ultraviolet device preferably bonds one disc at a time and preferably generates one flash per step of plate 1. At each step, the disc which is stopped at the curing position C is thus preferably bonded. A tilt management device 3 according to the invention is preferably associated to the curing position C. The operation of the tilt management device will be described later.

The set-up discs are then removed from the curing station at one of the exit positions D or E. The discs are for example automatically removed two-by-two at every second step of the rotating plate 1.

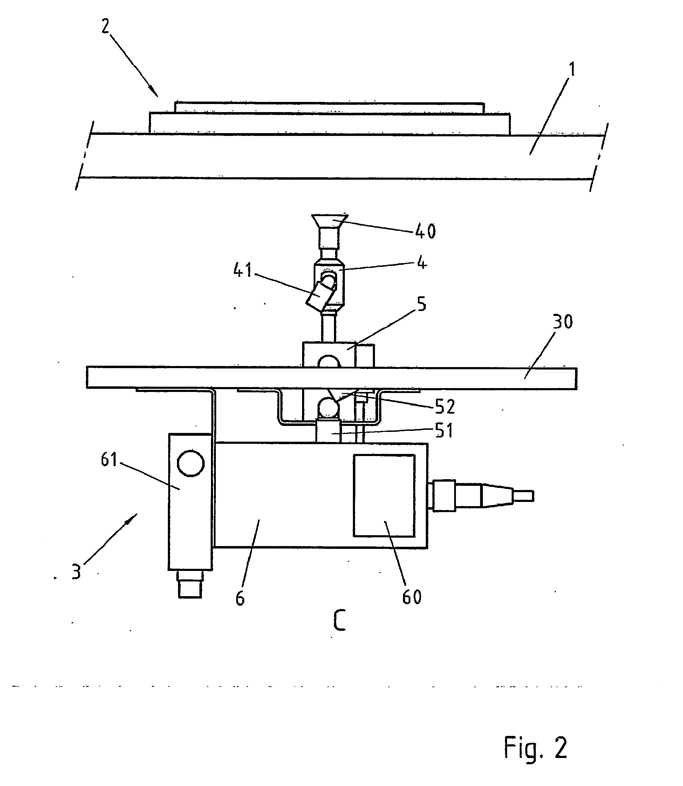

With reference to Figure 2, the tilt management device 3 according to a preferred embodiment of the invention comprises a suction nozzle 4 preferably terminated with a flexible suction pad 40. The suction pad 40 is for example made of a soft and tight material such as rubber in order to provide a tight connection between the suction nozzle 4 and the support 2 placed above it, whereas the bottom side of each sup port 2 is preferably at least partly accessible through an opening (not represented) in the rotating plate 1. The suction nozzle 4 is connected to a vacuum source 61 through a plug 41 to which for example a flexible hose (not represented) is attached. The suction nozzle 4 is preferably held vertically under the support 2 stopped at the curing position C. The suction nozzle 4 is preferably attached to a linear actuator, for example to a pneumatic jack 5, which can move it vertically in order for the suction pad 40 to be applied against the lower surface of support 2. The pneumatic jack 5 is for example connected to a source of compressed air (not represented) through two plugs 51, 52 to each of which a hose (not represented) is for example connected. The pneumatic jack 5 is elevated or lowered by opening one or the other connection to the source of compressed air.

An advantage of using a pneumatic jack 5 for actuating the suction nozzle 4 is its usually high acceleration and low inertia allowing to reach very short connection times having very little impact on the rate of the production line. Other actuators, some of which having the same advantages, can however be used within the framework of the invention for actuating the suction nozzle 4. The actuator can for example be an electromagnetic actuator, for example a linear voice coil motor.

The tilt management device 3 further comprises a preferably electronic controller 6 for controlling the suction force through the suction nozzle 4. The controller-6 thus preferably controls the -power of the source of vacuum and/or regulates the connection of the suction nozzle 4 to this source. The controller 6 preferably comprises a display 60 for displaying information, for example vacuum value and/or warning messages, to an operator. The controller 6 is preferably synchronized with a controller of the curing station which for example controls and synchronizes the movements of the plate 1, the movements of the pneumatic jack 5 and/or the ultraviolet radiation flashes.

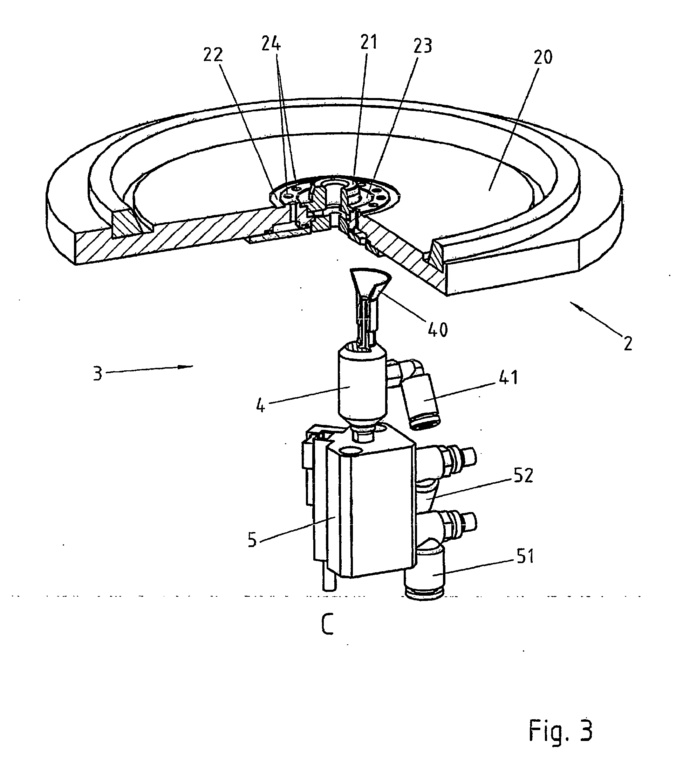

Figure 3 illustrates in more detail the structure of a support 2 and of the suction nozzle 4 according to a preferred embodiment of the invention. The support 2 comprises an essentially flat and horizontal annular resting surface 20 for supporting most of the surface of an optical disc (not represented). In its center, the support 2 comprises a centering device 21 for centering a disc which is deposited on the support 2. The centering device 21 is for example a protruding circular element whose external diameter is only slightly inferior to the internal diameter of the central opening of an optical disc. The profile of the centering device 21 is preferably conical in order to correctly center the deposited discs, even if they are initially slightly shifted. The centering device 21 also centers the two substrates of the assembled disc relative to each other. When the assembled discs are deposited on the support 2, the glue between the substrate is preferably still liquid. The substrates can thus slide relative to one another. Both substrates having a central opening of same diameter, they are both correctly centered around the centering device 21 when they are deposited on the support 2. They are thus also centered to each other.

Other forms of centering devices for centering the optical disc placed on the support 2 are however possible within the framework of the invention. Preferably, the centering device is located in the center of the support 2 and is inserted in the central opening of the disc placed on the support 2. In a variant embodiment, the centering device comprises for example elastically retractable elements on its periphery in order to adapt its outer diameter to possible variations of the diameter of the central openings from one optical disc to the other.

The-support 2 further comprises an annular groove 22 for lodging the annular ridge which is usually present on most optical discs and participates to their centering on the tray of some readers. Between the annular groove 22 and the centering device 21, the support 2 comprises a series of apertures 24 which are preferably regularly distributed around its center, for example on a same diameter. When the pneumatic jack 5 is elevated and the suction pad 40 is pressed against the lower surface of the support 2, the apertures 24 are connected to the vacuum nozzle 4 through openings and air ducts within the support 2. The apertures 24 are for example directly connected to a chamber 25 formed for example by an annular groove on the lower side of the support 2. The chamber 25 is for example closed by a cover 26 and its air tightness is preferably guaranteed through O-Rings placed between the cover 26 and the lower side of the support 2. The cover 26 preferably comprises an opening 27 situated above the aspiration nozzle when the support 2 is stopped in the curing position C. When the suction nozzle 4 is elevated, it is thus connected to the chamber 25 of the support 2.

Between the apertures 24 and the centering device 21, the support 2 preferably comprises a further annular groove 23 whose role will be explained further below.

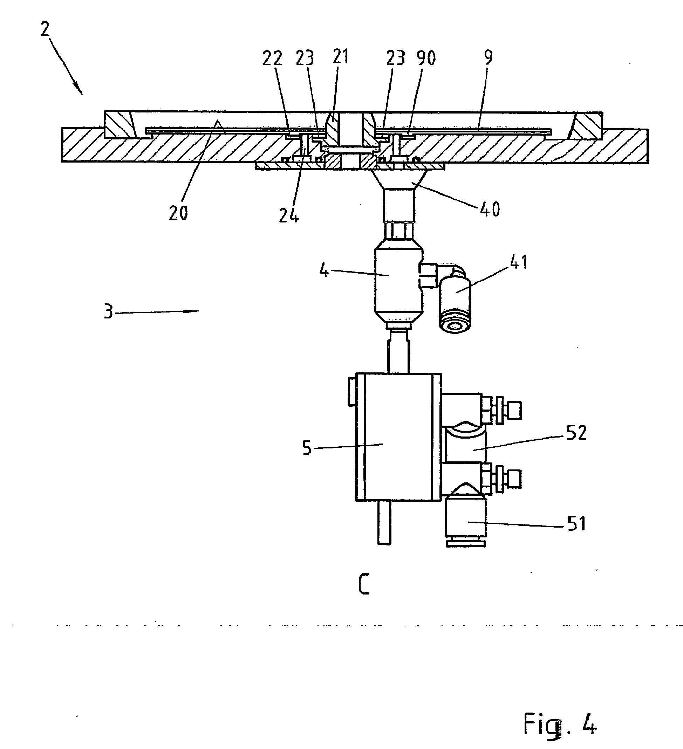

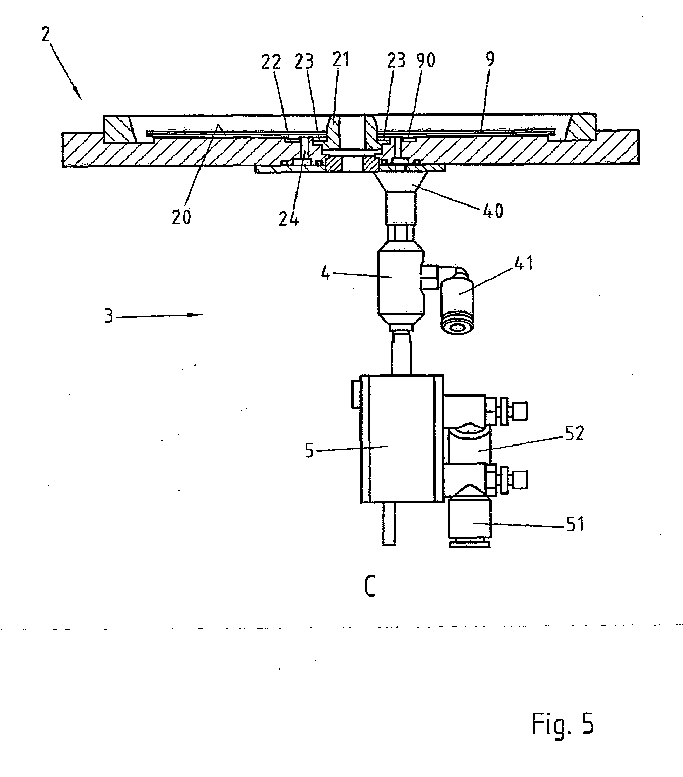

The tilt management method according to a preferred embodiment of the invention will be described with reference to the figures 4 and 5 which illustrate the tilt management device 3 of figure 3 with an optical disc 9 made of the assembly of two substrates placed on it.

The disc 9 to be set up by bonding its substrates together is placed on the support 2 at one of the entry positions A or B and rests on the resting surface 20. The centering device 21 is inserted in the central opening of both substrates of disc 9 and thereby centers them relative to each other and relative to the support 2. Under the effect of its own weight, the disc 9 essentially conforms to the shape of the resting surface 21 which significantly attenuates possible irregular unevenness of the disc 9 such as for example radial oriented waves.

Once the support 2 is brought into the curing position C and stopped, the pneumatic jack 5 is actuated to elevate the suction nozzle 4 until the suction pad 40 pushes against the lower side of the support 2. The suction pad 40 is applied around the opening 27 in order to link the chamber 25 to the suction pad 4 through this opening 27. The suction pad 40 is preferably pressed against the lower side of support 2 with a force ensuring an airtight contact between the suction nozzle 4 and the support 2.

Air is then sucked through the suction nozzle 4 by opening its connection to the vacuum source and/or by switching on the corresponding vacuum source. Air is thereby sucked from the openings 24 through the chamber 25, thus attracting the center of the disc 9 towards the bottom of the support 2. The suction force through the openings 24, and consequently the force applied on the disc 9, can be varied by varying the low pressure level in the suction nozzle 4. The force applied on disc 9 is preferably applied close to its center, preferably inside the annular ridge 90. If this force is kept relatively low, the entire disc 9 is regularly pulled towards the bottom of the support 2 and rests against the resting surface 20. When the suction force increases, the central part of the disc 9 is pulled with an increasing force against the openings 24 thus provoking the periphery of the disc 9 to rise from the resting surface 20 and the edge of its central opening to slightly sink within the groove 23. A tilt different from zero is thus applied on the disc 9 which becomes for example slightly concave (see figure 5). The tilt of disc 9 can thus be modified and/or controlled by modifying and/or controlling the suction strength through the apertures 24 thereby modifying and controlling the strength with which the center of the disc 9 is attracted towards the bottom of the support 2. The suction force is preferably managed by the controller 6 which controls the connection between the suction nozzle 4 and the respective vacuum source.

Once the disc 9 has the desired tilt value and this tilt value is preferably stabilized, it is submitted to ultraviolet radiations in order to cure the glue and thus bond the substrates together. The substrates being then unable to significantly move relative to each other, the disc 9 after the radiations is set up and essentially keeps the shape which was maintained during the curing operation. The disc 9 is thus set up with a desired-and predetermined tilt value which can be different from zero. The disc is thus for example pre-stressed in order for instance to compensate future deformations. Once the glue is cured and the disc 9 is thus bonded, the suction force is released and/or the suction nozzle 4 is lowered. The plate of the curing station is then moved one step further in order to bring a new disc to the curing position C.

The disc 9 is removed from its support 2 at one of the exit positions D, E of the curing station and possibly undergoes further operations. During these operations, the disc can be submitted to external constraints which could imply some deformation impacting its tilt. With the tilt management device of the invention, these later deformations can be compensated by the predetermined tilt applied to the disc during the curing operation.

The desired tilt value and/or pre-stress is thus preferably determined according to the operations which the disc 9 will undergo after the curing operation. These operations are for instance printing, for example serigraphy, drying, testing, etc., which possibly imply further impacts on the disc's tilt, for example due to surface constraints. The tilt applied to the disc during curing is thus preferably determined in order to compensate for these further deformations, so that the tilt of the finished disc is as close as possible to zero.

With the tilt management device 3 of the invention, a desired tilt can thus be applied to an optical disc 9 before its set-up, by regulating a force with which preferably its center is attracted or pushed against the bottom of a support 2 on which it rests. Preferably, the force is an attraction force exerted by pneumatic means. Other means for applying a force on the disc 9 are possible within the framework of the invention, such as for example mechanical elements pushing the disc 9 against the support 2, etc. Moving mechanical elements are however usually more complicated to realize and could damage the disc 9 when brought into contact with it.

The force is preferably-applied close to the center of the disc 9 in order to act with a higher lever arm on its geometry. Moreover, the force is preferably applied on a part of the disc 9 which is and always will be free of optically recorded data, typically inside the annular ridge 90, thus avoiding any damage which could destroy data or prevent their writing and/or their reading on the finished disc.

The tilt of the disc 9 is measured for example by optical means located near the curing position C of plate 1. Optical means comprise for example a camera for taking images of the disc 9 resting on the support 2 and image processing means for automatically measuring the deformation of the disc 9. Other tilt measuring means can however be used within the framework of the invention. According to a variant embodiment, each support 2 includes optical and/or electrical detection means for detecting when the periphery of the disc 9 reaches a certain height. These detection means are for example horizontal infrared beams which emit an electrical signal when they are interrupted.

According to an embodiment of the invention, the tilt value of each disc 9 is measured and monitored in the curing position C while force is applied on it. The force applied on each disc 9 is thus instantly corrected in function of the measured tilt value and its difference to the desired tilt value. According to this embodiment, the tilt of each disc 9 and the corresponding applied force is regulated individually.

According to another embodiment, the force required for obtaining a desired tilt value with a certain type of disc is determined through sampling. The required force for a desired tilt is for example adjusted as explained before only on a limited number of preferably identical discs. The force required for each one of these discs is measured and an average force is for example calculated. The next discs of this type will then each be cured while maintained on the support 2 with this average force. Preferably some sample measurements are regularly performed on some of the following discs in order to check if the applied average force-is-still adapted for the rest of the-production and to adapt it if necessary.

According to another embodiment of the invention, the tilt of the discs is measured after the curing operation, for example on a separate test station preferably independent from the curing station, for example at the end of the automatic production line. Either all discs or only some of them are tested on the test station. In a variant embodiment, the tilt is not measured in the curing position C, neither before curing nor after the curing operation. The force applied on the discs at the curing position is then preferably corrected according to the tilt values measured in the test station and their difference to the desired value. An advantage of this solution is that tilt measurement is preferably performed on a test station which is specially and optimally designed for this task, thus allowing optimal measurements. A disadvantage however is that the corrections of the force applied on the discs at the curing position are determined on the basis of discs which underwent the curing operation some time before and that several discs might have been produced in the meantime with a wrong tilt.

In a still further embodiment, both correcting methods are combined: the tilt of at least some discs is monitored at the curing station in order to define before the curing operation the force to be applied in order to achieve a certain tilt, and the tilt of at least some bonded discs is measured on a further test station in order to achieve finer adjustment of this force.

In the description above, the substrates are bonded together using an ultraviolet curable glue. Other adhering compositions can however be used within the framework of the invention for attaching the substrates to each other, for example other types of glue. The adhering composition will however preferably be a material which can be quickly cured or dried in a single operation while force is applied on the disc. This operation could be for example a high temperature drying operation, etc.

According to the invention, force is applied on the disc by pneumatic means in order to control its tilt value. Other means can however also be used within the framework of the invention for applying force on the disc and modifying its tilt. These means can be for example mechanical means, for instance a mechanical device pushing the center of the assembled disk against the bottom of the support, grips gripping the disc on its upper surface through its central opening and pulling it towards the bottom of the support, etc. A disadvantage of using mechanical devices for applying a force on the discs is that these devices usually imply accessing the upper side of the disc and at least partly covering it. It can thus negatively impact the quality of the discs' surface and prevent an even bonding of the substrates, in particular when bonding is performed with ultraviolet radiations.

In the description above, the disc 9 is made of the assembly of two substrates. The tilt management device and method of the invention can however also be used for discs made of three or more assembled substrates. The tilt management device and method of the invention can also be used for optical discs comprising only one substrate, whereas force is for example applied on the substrate while it is soft and the force is maintained during the entire hardening process, such as for example a drying process.

According to a preferred embodiment, the tilt management device of the invention is integrated in a curing station comprising a rotating plate having five determined positions and five supports for supporting optical discs. The tilt management device of the invention can however be integrated in various curing stations having for example another number of supports and positions, a different type of disc conveyor such as for example a linear conveyor, etc. In particular, the resting surface 20 can be fixed relative to the suction nozzle 4 and the discs are deposited one by one on the same surface, shaped with a predefined force, bonded and/or hardened and removed at the same position. A drawback of such an embodiment, however, is that the production rate considerably depends on the time needed for depositing and removing discs on and from the resting surface.

In a variant embodiment, the resting surface on which discs are deposited for their bonding and/or their set-up is not horizontal but has a determined shape corresponding to the desired shape of the finished discs. The surface is thus for example either slightly concave or slightly convex.

The force applied on the optical disc 9 is preferably automatically controlled and if necessary adjusted by the controller 6. In a variant embodiment, however, the force applied to the disc is adjusted manually for example on the basis of tilt measurement results displayed on the display 61. The force is for example varied with the help of a potentiometer which is for instance situated on the controller 6 and allows the suction force through the suction nozzle 4 to be controlled.

## Claims

1. Tilt management device (3) for modifying and controlling the tilt of optical discs (9), comprising:
a support (2) for supporting an optical disc (9),
force applying means for applying on said disc (9) a suction force for attracting and/or pushing at least a part of said disc (9) towards said support (2) when said disc (9) is placed on said support (2), said suction force modifying the tilt of said disc (9),
**characterized by** a controller (6) for varying the strength of said suction force, wherein said suction force is applied near the center of said disc (9), on a part of said disc (9) free of any data, wherein a desired tilt can be applied to said disc (9) by regulating said suction force strength.

2. Tilt management device (3) according to the preceding claim, further comprising means for setting up said disc (9) while said suction force is applied on said disc (9).

3. Tilt management device (3) according to the preceding claim, said disc (9) comprising at least two substrates with an ultraviolet curable composition between them, said means for setting up said disc (9) comprising an ultraviolet radiations generator for curing said ultraviolet curable composition.

4. Tilt management device (3) according to the preceding claim, comprising apertures (24) in said support (2), said apertures (24) being connected to a pneumatic system for sucking air through said apertures (24) and attracting said disc (9) towards said apertures (24).

5. Tilt management method for modifying and controlling the tilt of optical discs (9), comprising the steps of:
- placing an optical disc (9) on a support (2),
- applying on said disc (9) a suction force for attracting and/or pushing at least a part of said disc (9) towards said support (2), said suction force modifying the tilt of said disc (9),
- varying said suction force for varying the tilt of said disc (9),
**characterized in that** said suction force is applied near the center of said disc (9), on a part of said disc (9) free of any data, wherein a desired tilt can be applied to said disc (9) by regulating said suction force strength.

6. Tilt management method according to the preceding claim, further comprising the step of setting up said disc (9) while said suction force is applied on said disc (9).

7. Tilt management method according to the preceding claim, said disc (9) comprising at least two substrates with an ultraviolet curable composition between them, said step of setting up said disc (9) comprising radiating said disc (9) with ultraviolet radiations for curing said ultraviolet curable composition.

8. Tilt management method according to one of the claims 5 to 7, further comprising the steps of:
- measuring the tilt of said disc (9),
- adjusting said suction force in order to obtain the desired tilt value.

## Patentansprüche

1. Neigungsverwaltungseinrichtung (3), um die Neigung von optischen Scheiben (9) zu verändern und zu kontrollieren, umfassend
eine Anstützung (2), um eine optische Scheibe (9) abzustützen,
Kraftanwendungsmittel, um auf besagte Scheibe (9) eine Saugkraft anzuwenden, um mindestens einen Teil besagter Scheibe (9) zur Abstützung (2) hin anzuziehen oder zu stossen, wenn besagte Scheibe (9) auf der Abstützung (2) platziert ist, wobei besagte Saugkraft die Neigung besagter Scheibe (9) verändert,
**gekennzeichnet durch** einen Kontroller (6) um die Stärke von besagter Saugkraft zu verändern, wobei besagte Saugkraft nahe dem Zentrum von besagter Scheibe (9) auf einen Teil von besagter Scheibe (9) angewandet wird, die frei von irgendwelchen Daten ist, wobei eine gewünschte Neigung von besagter Scheibe (9) **durch** Regulierung gesagter Saugkraftstärke angewandt werden kann.

2. Neigungsverwaltungseinrichtung (3) gemäss dem vorangegangenen Anspruch, weiter umfassend Mittel zum Einrichten besagter Scheibe (9), während besagte Saugkraft an die Scheibe (9) angewandt wird.

3. Neigungsverwaltungseinrichtung (3) gemäss dem vorangegangenen Anspruch, wobei besagte Scheibe (9) mindestens zwei Substrate mit einer ultraviolett härtbaren Zusammensetzung dazwischen umfasst, besagte Mittel zum Einrichten besagter Scheibe (9) umfasst einen ultravioletten Strahlungsgenerator, um die ultraviolett härtbare Zusammensetzung auszuhärten.

4. Neigungsverwaltungseinrichtung (3) gemäss dem vorangegangenen Anspruch, umfassend Öffnungen (24) in besagter Abstützung (2), besagte Öffnungen (24) sind mit einem pneumatischen System verbunden, um Luft durch besagte Öffnungen (24) zu saugen und besagte Scheibe (9) zu besagten Öffnungen (24) zu ziehen.

5. Neigungsverwaltungsverfahren, um die Neigung von optischen Scheiben (9) zu verändern und zu kontrollieren, umfassend die Schritte von
- Platzieren einer optischen Scheibe (9) auf eine Abstützung (2),
- Anwenden auf besagte Scheibe (9) eine Saugkraft um mindestens einen Teil besagter Scheibe (9) zur Abstützung (2) hin anzuziehen oder zu stossen, wobei besagte Saugkraft die Neigung besagter Scheibe (9) verändert,
- Verändern der Saugkraft um die Neigung der besagten Scheibe (9) zu verändern,
**dadurch gekennzeichnet, dass** besagte Saugkraft nahe dem Zentrum von besagter Scheibe (9) auf einem Teil von besagter Scheibe (9) angewandet wird, die frei von irgendwelchen Daten ist, wobei eine gewünschte Neigung von besagter Scheibe (9) durch Regulierung gesagter Saugkraftstärke angewandt werden kann.

6. Neigungsverwaltungsverfahren gemäss dem vorangegangenen Anspruch, weiter umfassend den Schritt von Einrichten der besagten Scheibe (9) während besagte Saugkraft an die Scheibe (9) angewandt wird.

7. Neigungsverwaltungsverfahren gemäss dem vorangegangenen Anspruch, wobei besagte Scheibe (9) mindestens zwei Substrate mit einer ultraviolett härtbaren Zusammensetzung dazwischen umfasst, besagter Schritt von Einrichten besagter Scheibe (9) umfasst Bestrahlen besagter Scheibe mit ultravioletter Strahlung, um die ultraviolett härtbare Zusammensetzung auszuhärten.

8. Neigungsverwaltungsverfahren gemäss einem der Ansprüche 5 bis 7, umfassend die Schritte
- Messen der Neigung von besagter Scheibe (9),
- Anpassen besagter Saugkraft, um den gewünschten Neigungswert zu erhalten.

## Revendications

1. Dispositif de gestion d'inclinaison (3) pour modifier et contrôler l'inclinaison de disques optiques (9), comprenant :
un support (2) pour porter un disque optique (9),
des moyens d'application de force, pour appliquer une force d'aspiration sur ledit disque optique (9) pour attirer et/ou pousser au moins une partie dudit disque optique (9) vers ledit support (2), ladite force d'aspiration modifiant l'inclinaison dudit disque (9),
**caractérisé par** un contrôleur (6) pour faire varier l'intensité de ladite force d'aspiration, ladite force d'aspiration étant appliquée près du centre dudit disque (9) sur une partie dudit disque (9) libre de toute donnée, une inclinaison désirée pouvant être appliquée audit disque (9) en régulant ladite force d'aspiration.

2. Dispositif de gestion d'inclinaison (3) selon la revendication précédente, comprenant de plus des moyens pour configurer ledit disque lorsque ladite force d'aspiration est appliquée sur ledit disque (9).

3. Dispositif de gestion d'inclinaison (3) selon la revendication précédente, ledit disque (9) comprenant au moins deux substrats avec une composition durcissable aux ultra-violets entre eux, lesdits moyens pour configurer ledit disque (9) comprenant un générateur de radiations ultra-violettes pour durcir ladite composition durcissable aux ultraviolets.

4. Dispositif de gestion d'inclinaison (3) selon la revendication précédente, comprenant des ouvertures (24) dans ledit support (2), lesdites ouvertures (24) étant connectées à un système pneumatique pour aspirer de l'air à travers lesdites ouvertures (24) et attirer ledit disque (9) vers lesdites ouvertures (24).

5. Méthode pour modifier et contrôler l'inclinaison de disques optiques (9), comprenant les étapes de :
- placement d'un disque optique (9) sur un support (2),
- application sur ledit disque (9) d'une force d'aspiration pour attirer et/ou pousser au moins une partie dudit disque optique (9) vers ledit support (2), ladite force d'aspiration modifiant l'inclinaison du disque (9),
- variation de l'intensité de ladite force pour faire varier l'inclinaison dudit disque (9),
**caractérisée en ce que** ladite force d'aspiration est appliquée près du centre du disque (9) sur une partie dudit disque (9) libre de toute donnée, une inclinaison désirée pouvant être appliquée audit disque (9) en régulant ladite force d'aspiration.

6. Méthode de gestion de l'inclinaison selon la revendication précédente, comprenant de plus l'étape de configuration dudit disque (9) alors que ladite force d'aspiration est appliquée sur ledit disque.

7. Méthode de gestion de l'inclinaison selon la revendication précédente, ledit disque (9) comprenant au moins deux substrats avec une composition durcissable aux ultra-violets entre eux, ladite étape pour configurer ledit disque (9) comprenant l'irradiation dudit disque avec des radiations ultra-violettes pour durcir ladite composition durcissable aux ultra-violets.

8. Méthode de gestion de l'inclinaison selon l'une des revendications 5 à 7, comprenant les étapes de:
- mesure de l'inclinaison dudit disque (9),
- ajustement de ladite force d'aspiration pour obtenir la valeur d'inclinaison désirée.
